# EUROPEAN PATENT APPLICATION

(11) **EP 4 800 975 A1**
(43) Date of publication of application: **02.09.2026**
(21) Application number: 25160312.2
(22) Date of filing: 26.02.2025
(51) Int. Cl.: H04L 9/32

(54) **A METHOD AND SYSTEM FOR A KEY ENCAPSULATION MECHANISM (KEM)-BASED ISSUING AND RENEWAL OF DIGITAL CERTIFICATES**

(71) Applicant: Siemens Aktiengesellschaft, 80333 München (DE)
(72) Inventor: De Santis, Fabrizio, 80634 München (DE); Furch, Andreas, 85354 Freising (DE); Safieh, Malek, 81539 München (DE)
(74) Representative: Siemens Patent Attorneys

(57) **Abstract**

A method and system for a key encapsulation mechanism (KEM)-based issuing and renewal of digital certificates during migration of credentials of an end entity such as a client device from a first cryptographic algorithm to a second cryptographic algorithm, wherein the digital certificates are protected by first cryptographic signatures and first cryptographic signature public key certificates based on encryptions with symmetric keys derived from second cryptography KEM operations, wherein a signature public key (PKC1) or a certificate (Sign.cert (PKC1)) of the signature public key (PKC1) of the client device is bound to the KEM public key certificate.

## Description

The present invention relates a method and system for a key encapsulation mechanism (KEM)-based issuing and renewal of digital certificates during migration of credentials of a client device from a first cryptographic algorithm to a second cryptographic algorithm and in particular to KEM-based Zero Touch Certificate Issuance and Renewal.

For client devices a certificate-issuance process begins with the client device requesting a digital certificate from a Certificate Authority (CA). The client device must provide proof of identity to the Certificate Authority. The Certificate Authority then verifies the identity of the client device and, if the verification is successful, issues a digital certificate that binds a public key to device identity information and further metadata. These digital certificates have an expiration date, after which they become invalid. To continue using the digital certificate, it needs to be renewed or rekeyed before its expiration date.

Certificate renewal/re-keying refers to the process of extending the validity of an existing digital certificate (renewal), potentially by updating the corresponding key pair (re-keying). The certificate renewal/re-keying process involves obtaining a new certificate from the certificate authority that typically issued the original certificate. The Certificate Authority verifies the identity of the certificate holder again and issues a new certificate with a new expiration date.

A key encapsulation mechanism (KEM) is a mechanism that utilizes a public-key algorithm to securely encapsulate and exchange symmetric key material ,i.e. transmit a shared secret using a cipher text. The shared secret may be used as input to a key derivation function. The transmitted value is called KEM Cipher Text (CT). It can be used by both parties to derive the same symmetric key (with high probability). This derived symmetric key can be then used to protect messages or data exchanged (depending on the symmetric algorithm, protection can include integrity and/or confidentiality protection, i.e., not only encryption. The encapsulated symmetric key material is then commonly used to encrypt messages, ensuring their confidentiality and/or integrity. The key encapsulation mechanism consists of a generation procedure, an encapsulation procedure, and a de-capsulation procedure. The generation procedure creates the KEM key pair consisting of the public KEM key and the private KEM key. The generation procedure is typically randomized. I.e., when the generation procedure is called repeatedly, it almost certainly returns a different pair of a public KEM key and a private KEM key every time. Given the public KEM key, the encapsulation procedure of a key encapsulation mechanism creates a random secret ( symmetric key ) from the public KEM key and a corresponding cipher-text and returns both values. Depending on the KEM algorithm, the key can be directly used as a symmetric key or to derive multiple symmetric keys, e.g., using Key Derivation Functions (KDF). Given the private KEM key of the KEM key pair and the cipher-text obtained by the encapsulation procedure, the de-capsulation procedure returns the symmetric key generated by the encapsulation procedure with high probability. The Key Encapsulation Mechanism (KEM) is a known technique that can be used in public key cryptography to securely exchange a symmetric key respectively shared secret between two parties. Key Encapsulation Mechanisms can be used to, e.g., establish a secure communication channel when the two parties do not have a pre-shared secret key.

While post-quantum cryptography may ultimately replace pre-quantum algorithms like RSA (RSA = Rivest-Shamir-Adleman) and ECC (ECC = Elliptic Curve Cryptography) there is an intermediate phase where products transit from pre-quantum cryptography to post-quantum cryptography. This may possibly happen, when the devices are already deployed in the field. In this intermediate phase, both classical algorithms and post-quantum algorithms are used to complete the transition before cryptographically relevant quantum computers (CRQC) are able to replace pre-quantum (classical) algorithms.

Post-quantum cryptography refers to the development of cryptographic algorithms and particularly public-key algorithms that are secure against cryptographic attacks by a quantum computer. Post-quantum cryptography may ultimately replace pre-quantum public-key algorithms such as RSA or ECC. In the transition phase from pre-quantum cryptography to post-quantum cryptography, a transitioning of devices to post-quantum algorithms is required. However, cryptographic algorithms and particularly algorithms for creating and verifying digital signatures are difficult to migrate due to limited update possibilities. In particular, it might not be possible to update some pre-quantum cryptographic algorithms to post-quantum algorithms due to issues concerning interoperability, resources or certification. Conventional products or devices may use classic Diffie-Hellman (DH) and digital signature algorithms to ensure the security of certificate issuance and renewal/re-keying. However, there are currently no post-quantum Diffie-Hellman (DH) algorithms known that can be used as a direct replacement for current products.

Against this background, a problem addressed by the present invention is that of providing a method and system for providing key encapsulation mechanism (KEM)-based issuing and renewal of digital certificates during migration of credentials of a client device from a first cryptography to a second cryptography.

This problem is solved according to the present invention by a method having the features of claim 1 and/or by a system having the features of claim 12.

The invention provides according to a first aspect a method for a key encapsulation mechanism (KEM)-based issuing and renewal of digital certificates during migration of credentials of an end entity, in particular a client device, from a first cryptographic algorithm to a second cryptographic algorithm, wherein the digital certificates are protected by first cryptographic signatures and first cryptographic signature public key certificates based on encryptions with symmetric keys derived from second cryptography KEM operations, wherein a signature public key or a certificate of the signature public key of the client device is bound to the KEM public key certificate.

A first aspect of the method according to the present invention resides in that classical signatures are encrypted during transit using a key encapsulation mechanism (KEM). This prevents attackers from manipulating data during the transition of a first cryptographic algorithm to a second cryptographic algorithm.

A second aspect of the method according to the present invention comprises adding a binding value in the KEM public key certificate for signature public key (or public key certificate).This enables detecting whether a signature public key (or its certificate) has been manipulated or attacked.

The method allows an exchange of certificate signing request (CSR) including the signature (first message from the client device to the Certificate Authority CA), and the issued certificate (from the Certificate Authority CA to the client device), only in an authenticated encrypted way, based on symmetric keys derived from a KEM.

The invention further provides according to a second aspect a system for providing key encapsulation mechanism (KEM)-based issuing and renewal of digital certificates during migration of credentials of a client device from a first cryptographic algorithm to a second cryptograhic algorithm comprising a public key infrastructure connecting the client device to a Certificate Authority adapted to perform a method according to the first aspect of the present invention.

A Public Key Infrastructure (PKI) used by the method and system according to the present invention comprises an infrastructure that uses digital certificates and public-key cryptography to secure communication over the internet or other data networks, like industrial networks. In a Public Key Infrastructure (PKI), a trusted third party called a Certificate Authority (CA) issues digital certificates to individuals, organizations, or devices, especially based on identity checks. When two parties want to communicate securely, they exchange their public keys through their digital certificates. Provided both parties have a trust relationship to the Certificate Authority CA of the other party, they can be assured of the other's party identity.

The method and system according to the present invention provide KEM-based protocols to perform issuing and renewal/rekeying of digital certificates with further use of digital signature schemes. The proposed protocols are suitable for a transition phase to full post-quantum cryptography because they leverage on existing pre-quantum digital certificates and PKI infrastructure for client's authorization to successfully execute a zero touch post-quantum certificate issuance and renewal/rekeying using post-quantum KEMs and pre-quantum X.509v3 certificates as profiled by RFC 5280. Zero touch means that the process can be fully automatically done without any manual or human interaction/touch. Note that, although the present invention describes the issuing and renewal/rekeying of certificates relying on the existence of a post-quantum KEM and pre-quantum X.509 signing certificates, the present invention can be generalized and used for any future migration under the assumption that there exist a KEM that is still secure and a valid X.509v3 signing certificate.

The KEM-based protocols used by the method according to the first aspect of the present invention are suitable for a transition phase from a pre-quantum cryptography to a full post-quantum cryptography because they leverage in a possible embodiment on existing pre-quantum digital certificates and public key infrastructure (PKI) for client's authorization to successfully execute a zero touch post-quantum certificate issuance and a renewal/rekeying using post-quantum key encapsulation mechanisms (KEMs) and pre-quantum X.509v3 certificates as profiled by RFC 5280.

Although the method and system according to the present invention as described in the illustrated embodiments does relate to issuing and renewal/rekeying of certificates relying on the existence of a post-quantum KEM and pre-quantum X.509 signing certificates, the method according to the present invention can be applied more generally and can be used for any migration or transition from a first cryptographic algorithm to a second cryptograhic algorithm under the assumption that there exist after the migration/transition a key encapsulation mechanism (KEM) that is still secure and a valid signing certificate.

There are some core ideas underlying the proposed method and system as following.

The method and system according to the present invention make use of authenticated encryption of pre-quantum signatures and the corresponding signature public key certificate based on a post-quantum key encapsulation mechanism (KEM). This prevents adversaries that can observe the data in transit from attacking the signature or the signature public key certificate, provided the given pre-requisite below is met.

The method and system according to the present invention comprise a mechanism that binds the certificate or the public key of the signature key pair of the client device to a newly issued key encapsulation mechanism (KEM) certificate for the KEM public key. This allows to still use the potentially compromised signature key pair after the migration, using protocol B as described below. This works for the client device if the validation process of the method is properly performed (starting with validating the KEM-certificate and the included binding value in it, and then verifying the signature certificate).

In the method and system according to the present invention, concepts are introduced for protecting certificate renewal/re-keying by pre-quantum signatures (and pre-quantum signature public key certificates) based on encryptions with symmetric keys derived from post-quantum KEM operations together with binding values used within KEM certificates, that bind the signature public key certificate to a KEM certificate.

The binding value for the pre-quantum signature algorithm in the post-quantum KEM certificate allows usage of the pre-quantum signature key pair even it has been compromised between protocols A and B. It ensures that an attacker will not get a valid certificate in clear text even when using the compromised key. During the validation, the binding value is checked by the Certificate Authority CA. This check ensures that the digital signature that has been received by the Certificate Authority in a protected way and the key encapsulation mechanism (KEM)-public key used for later protection of the new key encapsulation mechanism (KEM)- public key certificate belong together. The newly issued certificate from protocol A is encrypted based on the key encapsulation mechanism (KEM) -public key included in the key encapsulation mechanism (KEM)-certificate established using protocol A. All this additionally requires that the algorithms and keys used by the Certificate Authority for certificate signing have not been compromised. Otherwise, it is mandatory to include a hash of the full (pre-quantum) signing certificate as binding value instead of only the public key value or a cryptographic hash of it. It is of note that newly to be issued certificates always need to be signed by the Certificate Authority using keys and signature algorithms that are not compromised at the time of issuance.

The method and system according to the present invention is based on key encapsulation mechanism (KEM) algorithms. This means that post-quantum or hybrid key encapsulation mechanisms (KEMs) can be used, hence providing resistance against quantum attacks, and allowing to adhere to the recommendations of several European cybersecurity agencies of using hybrid cryptography during the transition to post-quantum cryptography.

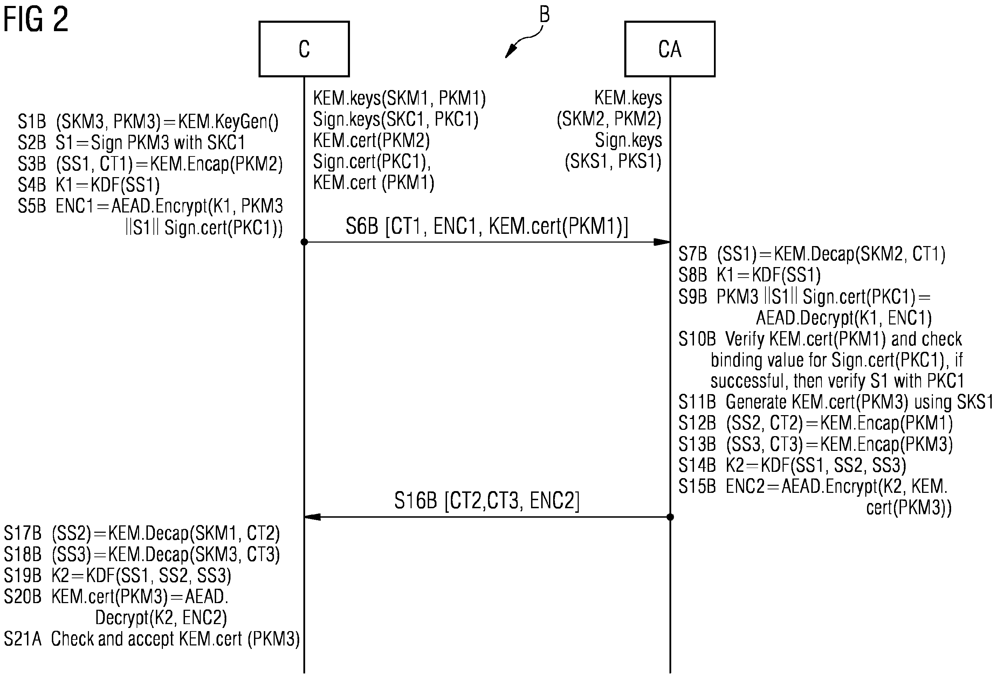

The proposed protocols A, B can be very useful during the transition to post-quantum cryptography, and in general, every time a transition to a stronger cryptography is necessary. The applied method according to the present invention allows to take advantage of existing (pre-quantum) infrastructure and certificates to authorize the issuance of post-quantum key encapsulation mechanism (KEM) certificates. Additionally, protocol B (as illustrated in Fig. 2) allows the renewal/re-keying of pre-quantum certificates into post-quantum certificates. Both KEM and signature certificates can be renewed/re-keyed. Hence, both protocols A, B can in combination be used to perform a recurring transition to a stronger cryptography

In a possible embodiment of the method for a key encapsulation mechanism (KEM)-based issuing and renewal of digital certificates during migration of credentials of a client device from a first cryptographic algorithm to a second cryptograhic algorithm the first cryptography comprises a pre-quantum cryptography and the second cryptography comprises a post-quantum cryptography.

In a possible embodiment of the method for a key encapsulation mechanism (KEM)-based issuing and renewal of digital certificates during migration of credentials of a client device from a first cryptographic algorithm to a second cryptograhic algorithm the client device comprises an uncompromised pre-quantum digital signature key pair, a trusted post-quantum digital certificate of a KEM public key of a Certificate Authority and a digital certificate of the pre-quantum signature public key of the client device.

In a possible embodiment of the method for a key encapsulation mechanism (KEM)-based issuing and renewal of digital certificates during migration of credentials of a client device from a first cryptographic algorithm to a second cryptograhic algorithm the certificate authority comprises a post-quantum key encapsulation mechanism (KEM) key pair and a post-quantum signature key pair.

In a possible embodiment of the method for a key encapsulation mechanism (KEM)-based issuing and renewal of digital certificates during migration of credentials of a client device from a first cryptographic algorithm to a second cryptograhic algorithm for issuance of a digital certificate the client device performs in a first protocol (A) the following steps: generating in a first step by the client device a KEM key pair using a KEM key generation algorithm; signing in a second step by the client device the KEM public key possibly with additional information, like freshness using the signature private key of the digital signature key pair held by the client device to provide a digital signature; generating in a third step by the client device a first secret a corresponding cipher-text using a key encapsulation mechanism (KEM) key encapsulation algorithm with the KEM public key held by the Certificate Authority; using in a fourth step by the client device a Key Derivation Function (KDF) to derive a symmetric key from the generated first secret; encrypting in a fifth step by the client device the KEM public key of the KEM key pair generated in the first step, the digital signature provided in the second step, and the signature public key certificate held by the client device using an Authenticated Encryption with Associated Data (AEAD) algorithm and the symmetric key derived in the fourth step to obtain an encrypted cipher-text; and transmitting in a sixth step by the client device the cipher text generated in the third step and the encrypted cipher text to the Certificate Authority.

In the fourth step depending on the algorithm, the KEM encapsulation may directly result in a symmetric key. Moreover, using a Key Derivation Function KDF several symmetric keys can be derived (if needed).

In a possible embodiment of the method for a key encapsulation mechanism (KEM)-based issuing and renewal of digital certificates during migration of credentials of a client device from a first cryptographic algorithm to a second cryptograhic algorithm for issuance of a digital certificate the Certificate Authority performs in the first protocol (A) the following steps: decapsulating in a seventh step by the Certificate Authority the received cipher-text using its KEM private key and a KEM key decapsulation algorithm to obtain the first secret; (If needed) using in an eighth step by the Certificate Authority a Key Derivation Function (KDF) to derive the symmetric key from the first secret obtained in seventh step; decrypting in a ninth step by the Certificate Authority the received encrypted cipher-text using the symmetric key derived in the eighth step and using an Authenticated Encryption with Associated Data (AEAD) decrypting algorithm to obtain the key encapsulation mechanism (KEM) public key, the digital signature, and the signature public key certificate of the client device; validating in a tenth step by the Certificate Authority the certification path of the signature public key certificate and the digital signature using the public key of the client device; generating in an eleventh step by the Certificate Authority a certificate for the client's key encapsulation mechanism (KEM) public key and binding the signature public key of the client device to the generated certificate and signing the certificate with the CA private signing key; performing in a twelfth step by the Certificate Authority an encapsulation of the client's key encapsulation mechanism (KEM) public key to obtain a second secret and a corresponding cipher-text; deriving in a thirteenth step by the Certificate Authority a secret key from the first secret and from the second secret using a Key Derivation Function (KDF); encrypting in a fourteenth step by the Certificate Authority the certificate generated in the eleventh step using the secret key derived in the thirteenth step and using an Authenticated Encryption with Associated Data (AEAD) encryption algorithm to provide an encrypted certificate; and transmitting in a fifteenth step by the Certificate Authority the cipher-text obtained in the twelfth step and the encrypted certificate to the client device.

The eight step is performed if needed in correspondence with the fourth step.

In a possible embodiment of the method for a key encapsulation mechanism (KEM)-based issuing and renewal of digital certificates during migration of credentials of a client device from a first cryptographic algorithm to a second cryptograhic algorithm for issuance of a digital certificate the client device performs in the first protocol (A) the following steps: decapsulating in a sixteenth step by the client device the received cipher-text using its KEM private key generated in the first step and a KEM key decapsulation algorithm to obtain the second secret; deriving in a seventeenth step by the client device a secret key from the first secret and from the second secret using a Key Derivation Function (KDF); decrypting in an eighteenth step by the client device the received encrypted certificate using the secret key derived in the seventeenth step and using an Authenticated Encryption with Associated Data (AEAD) decryption algorithm to obtain the digital certificate of the client's key encapsulation mechanism (KEM) public key; and accepting in a nineteenth step by the client device the obtained digital certificate of the client's key encapsulation mechanism (KEM) public key, if a check of the obtained digital certificate has been successfully performed by the client device. A signing or KEM key pair consists of a private and a public key. All symmetric algorithm use symmetric keys.

In a possible embodiment of the method for a key encapsulation mechanism (KEM)-based issuing and renewal of digital certificates during migration of credentials of a client device from a first cryptographic algorithm to a second cryptograhic algorithm wherein for renewal of a digital certificate the client device performs in a second protocol (B) the following steps: generating in a first step by the client device a KEM key pair using a KEM key generation algorithm; signing in a second step by the client device the KEM public key using the signature private key of the digital signature key pair held by the client device to provide a digital signature; generating in a third step by the client device a first secret and a corresponding cipher-text using a key KEM key encapsulation algorithm with the KEM public key held by the Certificate Authority; using in a fourth step by the client device a Key Derivation Function (KDF) to derive a symmetric key from the generated first secret; encrypting in a fifth step by the client device the KEM public key of the key pair generated in the first step, the digital signature provided in the second step, and the signature public key certificate held by the client device using an Authenticated Encryption with Associated Data (AEAD) algorithm and the symmetric key derived in the fourth step to obtain an encrypted cipher-text; and transmitting in a sixth step by the client device the cipher text generated in the third step and the encrypted cipher text and the key encapsulation mechanism (KEM) public key certificate of the client device that includes a binding value for the signature public key certificate, to the Certificate Authority.

In a possible embodiment of the method for a key encapsulation mechanism (KEM)-based issuing and renewal of digital certificates during migration of credentials of a client device from a first cryptography to a second cryptography, wherein for renewal of a digital certificate the certificate authority performs in the second protocol (B) the following steps: decapsulating in a seventh step by the Certificate Authority the received cipher-text using its KEM private key and a KEM key de-capsulation algorithm to obtain the first secret; using in an eighth step by the Certificate Authority a Key Derivation Function (KDF) to derive the symmetric key from the first secret obtained in seventh step; decrypting in a ninth step by the Certificate Authority the received encrypted cipher-text using the symmetric key derived in the eighth step and using an Authenticated Encryption with Associated Data (AEAD) decrypting algorithm to obtain the key encapsulation mechanism (KEM) public key, the digital signature, and the signature public key certificate of the client device; verifying in a tenth step by the Certificate Authority the received key encapsulation mechanism (KEM) public key certificate of the client device , checking the binding value included in the received certificate and verifying the digital signature using the signature public key of the client device; generating in an eleventh step by the Certificate Authority a key encapsulation mechanism (KEM) certificate for the client's KEM public key and binding the signature public key of the client device to the generated key encapsulation mechanism (KEM) certificate and signing the generated key encapsulation mechanism (KEM) certificate with its CA private key; performing in a twelfth step by the Certificate Authority an encapsulation of the client's key encapsulation mechanism (KEM) public key to obtain a second secret and a corresponding cipher-text; performing in a thirteenth step by the Certificate Authority an encapsulation of the client's key encapsulation mechanism (KEM) public key to obtain a third secret and a corresponding cipher-text; deriving in a fourteenth step by the Certificate Authority a secret key from the first, second and third secret using a Key Derivation Function (KDF); encrypting in a fifteenth step by the Certificate Authority the certificate generated in the eleventh step using the secret key derived in the fourteenth step and using an Authenticated Encryption with Associated Data (AEAD) encryption algorithm to provide an encrypted certificate; and transmitting in a sixteenth step by the Certificate Authority the second cipher-text obtained in the twelfth step ,the third cipher text obtained in the thirteenth step and the encrypted certificate to the client device.

In the fourteenth step a Key Derivation Function (KDF) is used since a symmetric key is derived from two or more secrets.

In a possible embodiment of the method for a key encapsulation mechanism (KEM)-based issuing and renewal of digital certificates during migration of credentials of a client device from a first crytrographic algorithm to a second cryptograhic algorithm for renewal of a digital certificate the client device performs in the second protocol (B) the following steps: decapsulating in a seventeenth step by the client device the received second cipher-text using its KEM private key and a KEM key decapsulation algorithm to obtain the second secret; decapsulating in an eighteenth step by the client device the received third cipher-text using its KEM private key and a KEM key decapsulation algorithm to obtain the third secret; deriving in a nineteenth step by the client device a secret key from the first secret, the second secret and from the third secret using a Key Derivation Function (KDF); decrypting in an twentieth step by the client device the received encrypted certificate using the secret key derived in the nineteenth step and using an Authenticated Encryption with Associated Data (AEAD) decryption algorithm to obtain the digital certificate of the client's key encapsulation mechanism (KEM) public key (PKM3); and accepting in a twenty-first step by the client device the obtained digital certificate of the client's key encapsulation mechanism (KEM) public key, if a check of the obtained digital certificate has been performed successfully by the client device.

In a possible embodiment of the method for a key encapsulation mechanism (KEM)-based issuing and renewal of digital certificates during migration of credentials of a client device from a first cryptographic algorithm to a second cryptograhic algorithm the client's signature public key is bound by the certificate Authority to the KEM certificate by attaching the client's signature public key, a hash of the client's signature public key or by attaching a signature of a certificate of the client's signature public key as an attribute to the KEM certificate.

The method according to the first aspect present invention comprises a computer-implemented method. The computer-implemented method can be implemented as a program or application. The program can be stored in a memory of the system. The program can be configured to execute the protocols A, B according to embodiments of the present invention.

The method can be applied in a technical system comprising a plurality of client devices connected via a network to at least one certificate authority. The technical system can comprise an industrial automated system with distributed client or edge devices. The client devices can be devices connected via a wired or wireless links to a network comprising a certificate authority.

Where appropriate, the above-mentioned configurations and developments can be combined implementations can be combined with each other as desired, as far as this is reasonable. Further possible configurations, developments and implementations of the invention also include combinations, which are not explicitly mentioned, of features of the invention which have been described previously or are described in the following with reference to the embodiments. In particular, in this case, a person skilled in the art will also add individual aspects as improvements or supplements to the basic form of the present invention.

Advantageous configurations and developments emerge from the further dependent claims and from the description with reference to the figures of the drawings.

The present invention is described in greater detail in the following on the basis of the embodiments shown in the schematic figures of the drawings, in which:
Fig. 1 shows a signaling for illustrating a possible exemplary embodiment of the method according to the present invention for issuance of a certificate;
Fig.2 illustrating a further possible exemplary embodiment of the method according to the present invention for renewal of a certificate.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. In the drawings, like, functionally equivalent and identically operating elements, features and components are provided with like reference signs in each case, unless stated otherwise.

The method can use KEM-based protocols to perform issuing and renewal/rekeying of digital certificates with further use of digital signature schemes. In the following protocols for certificate issuing (protocol A) and renewal/rekeying (protocol B) based on post-quantum key encapsulation mechanism (KEM) algorithms are described, which can be used for migration of credentials, e.g., from a pre-quantum signature to post-quantum key encapsulation mechanism (KEM) certificates.

The following detailed description does focus on the case of migration from pre-quantum to post-quantum certificates based on the existence of post-quantum key encapsulation mechanism (KEM) algorithms. However, it is of note that the approach taken by the method according to the present invention can be generalized such that any migration starting with a not-yet-broken digital signature certificate in protocol to a secure KEM or digital signature certificate can be realized, based on the existence of an also not-yet-broken secure key encapsulation mechanism (KEM) algorithm.

In the following, initially a fully automated "zero-touch" protocol A for certificate issuance is described which leverages existing certificates for public keys of signature algorithms to issue new certificates for public keys of key encapsulation mechanisms (KEMs) without the need of "out-of-band" authorization.

In a preferred variant of the method according to the present invention, the existing certificates for the signature public keys are pre-quantum secure (e.g., based on RSA- or ECC-based signatures), while the new certificates are issued for KEM public keys of some post-quantum secure key encapsulation mechanism (KEM). The KEM certificate should be signed with postquantum signatures by the Certificate Authority CA. In this case, the applied protocol can be suitable during the transition to post-quantum cryptography because it can take advantage of the existing security infrastructure, e.g., some public key infrastructure (PKI) that issues digital (pre-quantum) signing certificates.

Further a fully automated protocol B for a post-quantum secure renewal/re-keying of certificates without the need of "out-of-band" authorization is described. This protocol B can be used to renew certificates for the public keys of signature algorithms and public keys of key encapsulation mechanisms (KEM) as well, where at least the key encapsulation mechanisms (KEMs) need to be post-quantum secure.

For the zero-touch and automated approach in both protocols A, B client authorization is achieved by leveraging on existing digital signature certificates, which means that a corresponding identity check has already been done by the Certificate Authority CA.

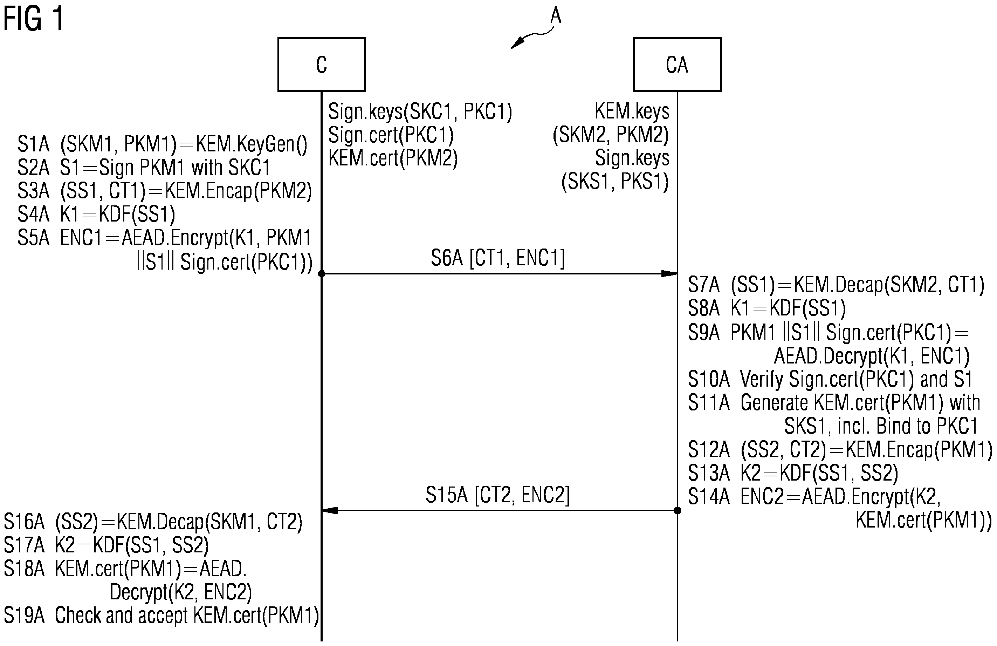

Both protocols A, B can be securely operated together if the following condition for the first (certificate issuance) protocol A is met:
The client device C already has a signature key pair (SKC1, PKC1) with a valid public key certificate Sign.cert (PKC1). In the migration scenario from pre-quantum signatures to post-quantum key encapsulation mechanisms (KEMs), i.e., in the first protocol A (Fig. 1), the pre-quantum signature key pair (SKC1, PKC1) must be still not compromised. Hence, this step of the migration, i.e., the first protocol A shall be performed before the pre-quantum signing certificate Sign.cert (PKC1) needs to be revoked.

The first protocol A for KEM-based certificate issuance without manual intervention is depicted in the signaling diagram of Fig. 1. This first protocol variant A assumes, that the Certificate Authority CA already has a certificate Sign.cert (PKC1) for the client's signature public key PKC1, i.e., the client identity has been already checked once by the Certificate Authority CA. Furthermore, it is assumed that neither the signature key pair nor the used signature algorithms have been compromised.

Hence, the first protocol variant A illustrated in Fig.1 involves a client device C that owns:
- a (pre-quantum) digital signature key pair (SKC1, PKC1) (being uncompromised)
- a trusted (post-quantum) certificate KEM.cert (PKM2) of the CA's KEM public key PKM2
- a certificate Sign.cert (PKC1) of the client's (pre-quantum) signature public key PKC1

Further the protocol variant A illustrated in Fig. 1 involves a certificate authority (CA) which owns:
- a (post-quantum) key encapsulation mechanism (KEM) key pair (SKM2, PKM2)
- a (post-quantum) signature key pair (SKS1, PKS1)

When the client device C intends to request a new certificate for a key encapsulation mechanism (KEM) public key it performs the following steps S according to the protocol variant A. The process illustrated in Fig.1 can be triggered automatically or in response to a command received by the client device C.

In step S1-A the client device C generates a new key pair (SKM1, PKM1) using a KEM key generation algorithm KEM.KeyGen ().

### (SKM1, PKM1)= KEM.KeyGen ( )

In step S2-A the client device C signs the public key PKM1 using the signature private key SKC1 of the digital signature key pair (SKC1,PKC1) held by the client device C to provide a digital signature S1.

### S1=Sign PKM1 with SKC1

In step S3-A the client device C generates a secret SS1 and a corresponding cipher-text CT1 using a key encapsulation mechanism (KEM) key encapsulation algorithm KEM.Encap () with the CA's public key PKM2.

### (SS1, CT1) = KEM.EnCap (PKM2)

In step S4-A the client device C optionally uses a Key Derivation Function (KDF) to derive a symmetric key K1 from the secret SS1 generated in step S3-A.

### K1 = KDF (SS1)

In step S5-A the client device C encrypts (preferably confidentiality and integrity protected) the public key PKM1 generated in Step S1-A, the digital signature S1 provided in step S2-A, and the signature public key certificate Sign.cert (PKC1) owned by the client device C using an Authenticated Encryption with Associated Data (AEAD) algorithm and the symmetric key K1 derived in step S4-A to obtain an encrypted cipher-text ENC1.

ENC1 = AEAD.Encrypt (K1, PKM3 IIS1II Sign.cert(PKC1)
wherein the above symbol II means concatenation.

In step S6-A the client device C transmits both cipher-texts CT1 and ENC1 to the Certificate Authority CA as illustrated in the signaling diagram of Fig.1

The Certificate Authority CA performs in the first protocol variant A illustrated in the signaling diagram of Fig.1 the following operational steps:
In step S7-A the Certificate Authority CA de-capsulates the received cipher-text CT1 using its KEM private key SKM2 and the KEM key de-capsulation algorithm KEM.Decap () to obtain the secret SS1.

### (SS1)= KEM.Decap (SKM2, CT1)

If the de-capsulation in step S7-A fails, then protocols A aborts.

In step S8-A the Certificate Authority CA optionally uses a Key Derivation Function (KDF) to derive a symmetric key K1 from the secret SS1 obtained in step S7-A.

### K1 =KDF (SS1)

In step S9-A the Certificate Authority CA decrypts the received encrypted cipher-text ENC1 using the symmetric key K1 derived in step S8-A and the AEAD.Decrypt () algorithm to obtain the key encapsulation mechanism (KEM) public key PKM1, the digital signature S1, and the signature public key certificate Sign.cert (PKC1) of this client device C (in plaintext).

### PKM1 II S1II Sign.cert (PKC1) = AEAD.Decrypt (K1,ENC1)

In step S10-A the Certificate Authority CA validates the certification path of the signature public key certificate Sign.cert (PKC1) and validates the digital signature S1 using the client's public key PKC1.

### Verify Sign.cert (PKC1) and digital signature S1

If one of both verifications fails, then protocol A aborts here. Otherwise, the client device C is successfully authenticated and authorized, and protocol A continues until the end.

In step S11-A the Certificate Authority CA generates a certificate KEM.cert (PKM1) for the client's key encapsulation mechanism (KEM) public key PKM1, it binds the client's public key PKC1 to this generated KEM certificate (e.g., by adding PKC1, a hash of PKC1, or a hash of Sign.cert (PKC1) as an attribute) and signs the generated certificate with its postquantum signature private key SKS1 of the Certificate Authority CA.

In step S12-A the Certificate Authority CA performs an encapsulation using KEM.Encap (PKM1), where PKM1 is the new client's key encapsulation mechanism (KEM) public key to obtain a new secret SS2 and a corresponding cipher-text CT2. This step S12-A additionally ensures the possession of the KEM private key SKM1 by the client device later, i.e., when step S16-A is successfully performed.

### (SS2, CT2)= KEM.Encap (PKM1)

In step S13-A the Certificate Authority CA derives a secret key K2 from the secrets SS1 and SS2 using a Key Derivation Function KDF.

### K2 = KDF (SS1, SS2)

In step S14-A the Certificate Authority CA encrypts the certificate KEM.cert (PKM1) using the secret key K2 derived in step S13-A and an AEAD.Encrypt() algorithm.

### ENC2=AEAD.Encrypt (K2, KEM.cert (PKM1))

In step S15-A the Certificate Authority CA sends the cipher-texts CT2 and ENC2 to the client device C as illustrated in the signaling diagram of Fig.1

The client device C performs the following operational steps to finalize protocol A:
In step S16-A the client device C decapsulates the received cipher-text CT2 using its private key SKM1 and the KEM key decapsulation algorithm KEM.Decap () to obtain the secret SS2.

### (SS2) = KEM.Decap (SKM1, CT2)

If step S16-A fails, protocol A aborts here, and the client device C is not able to get the newly issued certificate KEM.cert (PKM1).

In step S17-A the client device C derives a secret key K2 from the secrets SS1 and SS2 using a Key Derivation Function KDF.

### K2= KDF (SS1, SS2)

In step S18-A the client device C decrypts ENC2 using the secret key K2 derived in step S17-A and an AEAD.Decrypt () algorithm to obtain the certificate KEM.cert (PKM1).

### KEM.cert (PKM1) = AEAD.Decrypt (K2, ENC2)

If step S18-A fails, protocol A aborts here, and the client device C is not able to get the newly issued certificate KEM.cert (PKM1) (in plaintext).

In step S19-A the client device C finally checks, accepts, and stores the certificate KEM.cert(PKM1), if the check is performed successfully.

Technical considerations concerning the embodiment illustrated in Fig.1 showing protocol A:
- In step S5-A the certificate Sign.cert (PKC1) of the client's signature public key PKC1 is protected based on the key encapsulation mechanism (KEM) operation and can be deprotected in step S9-A only by the Certificate Authority CA (using the KEM private key SKM2) based on KEM operations. In step S10-A a signature and certification path validation up to the root CA is applied to successfully authenticate the client respectively the originator of the digital signature.
- In step S11-A the newly issued certificate for KEM.cert (PKM1) must include a binding value that binds it to the signature public key PKC1 or to its certificate Sign.cert (PKC1) (e.g., using a hash value). Including a binding for the pre-quantum signature public key PKC1 in the newly issued certificate for the postquantum key encapsulation mechanism (KEM) public key is a contribution from the method according to the present invention.
- In step S19-A, it is possible that the client device C checks if the binding value for the signature public key is the correct one.
- In step S4-A and in step S8-A, execution of a Key derivation Function KDF is recommended, but not necessary if the key encapsulation mechanism (KEM )already provides high-entropy secrets. In case no Key derivation Function KDF is used, then the secret SS1 is used as a symmetric key K1 in the successive step S4-A and step S8-A,i.e. K1=SS1.
- In step S5-A, the digital signature S1 must be confidentiality and integrity protected. However, PKM1 could be only integrity protected. The confidentiality protection of the digital signature S1 based on a postquantum key encapsulation mechanism (KEM) is a feature of the method according to the present invention to protect pre-quantum signatures in transit against postquantum attackers. This hardens attacks for adversaries that can only observe the data in transit.
- In step S14-A, it is sufficient that KEM.cert (PKM1) is integrity protected.
- In step S14-A and in step S17-A, the execution of a Key Derivation Function KDF is mandatory.
- In steps S5-A, S9-A, S14-A, and S18-A any other authenticated encryption primitive like a block cipher using proper modes of operation or a properly implemented stream cipher can be used in place of Authenticated Encryption with Associated Data (AEAD). Authenticated Encryption with Associated Data (AEAD) represent the current state of the art for (authenticated) encryption. Note that Authenticated Encryption with Associated Data (AEAD) typically takes as input further parameters like a nonce, which are omitted here for the sake of clarity, but are important to guarantee freshness, integrity, and security properties of the protocol.

Security considerations:
- The second protocol variant B depicted in the signaling diagram of Fig. 2 works because only the client device C having the private key SKM1 can derive the symmetric or secret key K2 which correctly decrypts respectively de-protects ENC2 to the certificate KEM.cert (PKM1).
- The protocol variant allows the issuance of a post-quantum key encapsulation mechanism (KEM) certificate relying only on the existence of post-quantum key encapsulation mechanism (KEM) algorithms. It relies on pre-quantum signature algorithms and the existence of pre-quantum certificates to authenticate the client device C and to automatically "zero-touch" obtain a post-quantum key encapsulation mechanism (KEM) certificate. The main assumption for this protocol is that the pre-quantum signature key pair must be still not attacked when this protocol starts. In this case the protocol is post-quantum secure during data transfer because the digital signature S1 and the signature public key certificate Sign.cert (PKC1) are symmetrically encrypted using a secret key encapsulated by the post-quantum key encapsulation mechanism (KEM,) hence not exposed during the communication. This means that the communication is post-quantum secure, although pre-quantum signatures are used.
- With the new feature of the method according to the present invention, i.e., including a binding value of the pre-quantum signature public key PKC1 of the client device in the newly issued post-quantum certificate, an identification mechanism is provided. Based on this identification mechanism certain attacks (e.g., man-in-the-middle) can be resisted. More discussion on that is available in the security consideration of the protocol variant B illustrated in Fig.2.

The second protocol (i.e. protocol variant B) can be used to perform a renewal and/or re-keying of a digital certificate as depicted in the signaling diagram of Fig 2.

The protocol variant B involves a client device C that possesses a key encapsulation mechanism (KEM) key pair (SKM1, PKM1) together with a digital signature key pair (SKC1, PKC1) and a certificate authority (CA) which possesses a key encapsulation mechanism (KEM) key pair (SKM2, PKM2) and a signature key pair (SKS1, PKS1) as shown in Fig.2.

The client device C additionally has a trusted certificate KEM.cert (PKM2) of the CA's public key PKM2, a trusted key encapsulation mechanism (KEM) certificate KEM.cert (PKM1) of the client's key encapsulation mechanism (KEM) public key PKM1 (including a binding value for Sign.cert (PKC1)) as well as a certificate Sign.cert (PKC1) of the client's signature public key PKC1, which were securely stored (integrity protected) in a memory, e.g., during certificate issuance.

In a possible embodiment the digital signature key pair (SKC1, PKC1) possessed by the client device C as well as the certificate Sign.cert (PKC1) of the client's signature public key PKC1 are suitable for a pre-quantum cryptographic algorithm. All other cryptographic credentials and certificates used for the protocol variant B shown in Fig.2 are in a preferred embodiment secure for postquantum applications.

When the client device C wants to request a certificate renewal/re-keying it performs in a possible embodiment the following steps:
In a first step S1-B the client device C generates a new key encapsulation mechanism (KEM) key pair (SKM3, PKM3) using a key encapsulation mechanism (KEM) key generation algorithm KEM.KeyGen().

### (SKM3, PKM3) = KEM.KeyGen().

**In a step S2-B** the client device C signs the public key PKM3 of the key encapsulation mechanism (KEM) key pair generated in step S1-B using the private key SKC1 of the digital signature key pair (SK1,PK1) possessed by the client device C to provide a digital signature S1.

### S1=Sign PKM3 with SKC1

In step S3-B the client device C generates a secret SS1 and a corresponding cipher-text CT1 using a key encapsulation mechanism (KEM) key encapsulation algorithm KEM.Encap () with the CA's public key PKM2 of the key encapsulation mechanism (KEM) key pair (SKM2, PKM2) owned by the certificate authority (CA).

### (SS1, CT1) = KEM.Encap (PKM2)

In step S4-B the client device C optionally uses a Key Derivation Function (KDF) to derive a symmetric key K1 from the secret SS1 having been generated in step S3-B.

### K1= KDF (SS1)

In step S5-B the client device C encrypts (preferably confidentiality and integrity protected) the public key PKM3 generated in step S1-B, the digital signature S1 provided in step S2-B, and the signature public key certificate of the client Sign.cert (PKC1) owned by the client device C using an Authenticated Encryption with Associated Data (AEAD) encryption algorithm together with the symmetric key K1 derived in step S4-B to obtain a cipher-text ENC1.

### ENC1 = AEAD.Encrypt (K1, PKM3 II S1 II Sign.cert (PKC1))

In step S6-B the client device C transmits both cipher-texts, i.e. the cipher-text CT1 generated in step S3-B and the encrypted cipher-text ENC1 generated in step S5-B, and the key encapsulation mechanism (KEM) public key certificate of the client device KEM.Cert (PKM1) that includes a binding value for the signature public key certificate to the Certificate Authority CA as illustrated in Fig.2.

### Step S6-B : Transmit (CT1, ENC1, KEM.cert (PKM1)) from client device C to Certificate Authority CA

The Certificate Authority CA then performs the following operational steps S:
In step S7-B the Certificate Authority CA decapsulates the received cipher-text CT1 using its private key SKM2 and the KEM key decapsulation algorithm KEM.Decap () to obtain the secret SS1.

### (SS1) = KEM.Decap (SKM2, CT1)

If the de-capsulation of step S7-B fails, the protocol B aborts.

In step S8-B the Certificate Authority CA optionally uses a Key Derivation Function (KDF) to derive a symmetric key K1 from the secret SS1 obtained in step S7-B.

### K1 = KDF (SS1)

In a step S9-B the Certificate Authority CA decrypts the encrypted cipher-text ENC1 received in step S6-B using the symmetric key K1 derived in step S8-B and the AEAD.Decrypt () algorithm to obtain the public key PKM3, the digital signature S1, and the signature public key certificate of the client Sign.cert (PKC1) in plaintext.

### PKM3 || S1 || Sign.Cert(PKC1) = AEAD.Decrypt(K1, ENC1)

In a step S10-B a verification is performed by the Certificate Authority CA in three sub steps: In a first sub step S10-B.1 the certification path of the received KEM.cert (PKM1) is verified. Then in a second sub step S10-B.2 the binding value included in this certificate is compared with the signature public key certificate received from this client device C, i.e., Sign.cert (PKC1). Additionally, a certification path validation is done for Sign.cert (PKC1) in a third sub step S10-B.3 .
- Verify KEM.cert (PKM1) (in sub step S10-B.1) and
- Check binding value for Sign.cert (PKC1) (in sub step S10-B.2)
- If successful, then verify digital signature S1 with client's public key PKC1 (in sub step S10-B.3)

The certification path validation for the signature public key certificate Sign.cert (PKC1) may be omitted under certain circumstances due to the binding value check. Finally, if these checks are successful, the Certificate Authority CA verifies the digital signature S1 using the client's public key PKC1 included in the signature public key certificate. If one of these steps fails, then the protocol B aborts here. Otherwise, the protocol B continues as follows.

In step S11-B the Certificate Authority CA generates a key encapsulation mechanism (KEM) certificate KEM.cert (PKM3) for the client's KEM public key PKM3, it binds the client's signature public key PKC1 to this certificate (e.g., by attaching PKC1, a hash of PKC1 or of Sign.cert (PKC1)) and signs the certificate with its private key SKS1.

### Generate KEM.cert (PKM3) using the private key SKS1 of the Certificate Authority CA

In step S12-B the Certificate Authority CA performs an encapsulation using KEM.Encap (PKM1), where PKM1 is the client's key encapsulation mechanism (KEM) public key to obtain a new secret SS2 and a corresponding cipher-text CT2.

### (SS2, CT2) = KEM.Encap (PKM1)

In step S13-B the Certificate Authority CA performs an encapsulation using KEM.Encap (PKM3), where PKM3 is the client's key encapsulation mechanism (KEM) public key to obtain a new secret SS3 and a corresponding cipher-text CT3.

### (SS3, CT3)= KEM.Encap (PKM1)

In step S14-B the Certificate Authority CA derives a symmetric key K2 from the secrets SS1, SS2, SS3 using a Key Derivation Function KDF.

### K2= KDF (SS1, SS2, SS3)

In step S15-B the Certificate Authority CA encrypts the key encapsulation mechanism (KEM) certificate KEM.cert (PKM3) using the symmetric key K2 derived in step S14-B and an AEAD.Encrypt() algorithm.

### ENC2= AEAD.Encrypt (K2 KEM,Cert (PKM3))

In step S16-B the Certificate Authority CA sends the cipher-texts CT2, CT3, ENC2 to the client device C as illustrated in the signaling diagram of Fig.2.

### Transmit (CT2, CT3, ENC2) from Certificate Authority CA to client device C

The client device C performs the following operational steps S to finalize the protocol B:
In step S17-B the client device C de-capsulates the received cipher-text CT2 using its private key SKM1 and the key encapsulation mechanism (KEM) key de-capsulation algorithm KEM.Decap () to obtain the secret SS2.

### (SS2) =KEM.Decap (SKM1, CT1)

If the step S17-B fails, the protocol B aborts here, and the client device C cannot get the newly issued certificate KEM.cert (PKM3) (in plaintext).

In step S18-B the client device C de-capsulates the received cipher-text CT3 using its private key SKM3 and the key encapsulation mechanism (KEM) key de-capsulation algorithm KEM.Decap () to obtain the secret SS3.

### (SS3) = KEM.Decap (SKM3, CT3)

If step S18-B fails, the protocol B aborts here, and the client device C cannot get the newly issued key encapsulation mechanism (KEM) certificate KEM.cert (PKM3) (in plaintext).

In step S19-B the client device C derives a symmetric key K2 from the secrets SS1, SS2, SS3 using a Key Derivation Function KDF.

### K2= KDF (SS1, SS2, SS3)

In step S20-B the client device C decrypts ENC2 using the symmetric key K2 derived in step S19-B and an AEAD.Decrypt () algorithm to obtain the key encapsulation mechanism (KEM) certificate KEM.cert (PKM3) in plaintext.

### KEM.cert (PKM3) = AEAD.Decrypt (K2, ENC2)

If step S20-B fails, the protocol B aborts here, and the client device C cannot get the newly issued key encapsulation mechanism (KEM) certificate KEM.cert (PKM3) (in plaintext).

In step S21-B the client device C finally checks the key encapsulation mechanism (KEM) certificate obtained in step S20-B and if the check is successful the client device C accepts, and stores the key encapsulation mechanism (KEM) certificate KEM.cert (PKM3).

Technical considerations concerning the protocol process B illustrated in the embodiment of Fig.2:
- In step S5-B, KEM.cert (PKM1) can be protected with Authenticated Encryption with Associated Data ((AEAD) and symmetric key K1 and included in ENC1 (instead of simply attaching it to ENC1 in step S6-B of Fig. 2). It is of note that integrity only protection would be sufficient.
- In step S4-B and S8B, execution of a Key Derivation Function KDF is recommended, but not necessary if the key encapsulation mechanism (KEM) already provides high-entropy secrets. In case, no Key Derivation Function (KDF) is used, then the secret SS1 is used as a symmetric key K1 in the successive steps S4-B and S8-B, i.e., K1 = SS1.
- In step S15-B, the confidentiality protection of KEM.cert (PKM3) is mandatory, to prevent an attacker to get the newly issued KEM-certificate in plaintext.
- In step S21-B, it is possible that the client device C checks if the binding value for the signature public key included in KEM.cert (PKM3) is the correct one.
- In step S14-B and S19-B, the execution of a Key Derivation Function KDF is mandatory.
- In step S14-B and S19-B, secret SS3 may be excluded from the Key Derivation Function KDF for the derivation of the symmetric key K2. In this case, steps S13-B and S18-B may be excluded from the process B illustrated in Fig. 2 as well. This depends on the certification policy and certification practice statement of the Certificate Authority CA. It is recommended to include steps for additional implicit proof of private key possession for SKM3.
- In step S5-B, S9-B, S15-B, and S20-B any other encryption primitive like a block cipher or a stream cipher can be used in place of Authenticated Encryption with Associated Data (AEAD) if properly used together with some authentication primitive. Authenticated Encryption with Associated Data (AEAD) represent the current state of the art for (authenticated) encryption. Note that Authenticated Encryption with Associated Data (AEAD) typically takes as input further parameters like a nonce, which are omitted here for the sake of clarity, but are important to guarantee freshness and security properties of the protocol.

### Security considerations:

- The protocol B of Fig. 2 works because only the client device C owning the secret keys SKM1 and SKM3 can derive the secret key K2 which correctly decrypts ENC2 to the new key encapsulation mechanism (KEM) certificate KEM.cert (PKM3).
- The protocol B allows the renewal/re-keying of a post-quantum key encapsulation mechanism (KEM) certificate relying only on the existence of post-quantum key encapsulation mechanisms (KEMs). It additionally relies on pre-quantum signature algorithms and the existence of pre-quantum certificates to automatically "zero-touch" authenticate the client device C to the Certificate Authority CA and to obtain a new post-quantum key encapsulation mechanism (KEM) certificate. This is possible because the digital signature S1 is confidentiality and integrity protected symmetrically using a secret key encapsulated by the post-quantum key encapsulation mechanism (KEM), hence cannot be read or manipulated during the communication. The verification process starts by validating the post-quantum key encapsulation mechanism (KEM) - certificate, the included binding value in it for the pre-quantum signature certificate (both integrity protected with a post-quantum signature) and the pre-quantum signature certificate. Put together, the Certificate Authority CA may automatically decide to issue a new certificate.
- Including a binding value of the pre-quantum signature public key PKC1 or of its certificate in the postquantum key encapsulation mechanism (KEM) public certificate enables new features. Assume that the pre-quantum signature key pair has been compromised after running the first protocol A. In this case, the attacker can correctly sign manipulated data. However, provided the signature algorithm and keys used by the Certificate Authority CA has not been compromised, it is impossible for the attacker to change the binding value of the signature public in the key encapsulation mechanism (KEM) certificate, which has the following consequences:

A postquantum attacker may attack the pre-quantum signature key pair (but not the postquantum key encapsulation mechanism (KEM) key pair and can sign manipulated data or data of its own choice. The attacker encapsulated the CA KEM public key to obtain a symmetric key to protect the data, the signature, and the correct signature public key certificate (from the to be attacked client device C), which results in the cipher-texts CT1 and ENC1. Now an attacker has two possibilities:
- The attacker can attach his own key encapsulation mechanism (KEM) public key certificate. In this case, the validation process (e.g., step S10-B in Fig. 2) will fail, since the binding value included in the key encapsulation mechanism (KEM) certificate does not match the used signature public key respectively certificate.
- The attacker can attach the key encapsulation mechanism (KEM) public key certificate of the correct client device. In this case, the validation process (e.g., step S10-B in Fig. 2) will be successful, and a new key encapsulation mechanism (KEM) certificate including a binding value to the signature public key is issued. However, the newly issued key encapsulation mechanism (KEM) certificate is according to an idea underlying the method according to the present invention encrypted with a symmetric key resulting from encapsulating the clients public key included in the correct key encapsulation mechanism (KEM) certificate, see step S15-B in Fig. 2. Hence, only the correct client device can decrypt the newly issued key encapsulation mechanism (KEM) certificate using the corresponding key encapsulation mechanism (KEM) private keys, but not an attacker. In this case the attacker would not be able to get the newly issued key encapsulation mechanism (KEM) certificate in clear text provided the client device does not decrypt it and allows the attacker access to the decrypted value.

The protocol variant B of Fig.2 can be modified to update a digital signature certificate instead of a key encapsulation mechanism (KEM) certificate. For example, it is sufficient to modify steps S1-B, S11-B and S2-B to generate and accept a certificate for a digital signature public key. Hence, it can be used to renew both PQ signature and PQ KEM certificates during the transition to post-quantum (PQ) cryptography.

Although the present invention has been described in the above by way of embodiments, it is not limited thereto, but rather can be modified in a wide range of ways. In particular, the invention can be changed or modified in various ways without deviating from the core of the invention.

Independent of the grammatical term usage, individuals with male, female or other gender identities are included within the term.

## Claims

1. A method for a key encapsulation mechanism (KEM)-based issuing and renewal of digital certificates during migration of credentials of an end entity, in particular a client device, from a first cryptographic algorithm to a second cryptographic algorithm,
wherein the digital certificates are protected by first cryptographic signatures and first cryptographic signature public key certificates based on encryptions with symmetric keys derived from second cryptography KEM operations, wherein a signature public key (PKC1) or a certificate (Sign.cert (PKC1)) of the signature public key (PKC1) of the client device is bound to the KEM public key certificate.

2. The method according to claim 1, wherein the first cryptographic algorithm comprises a pre-quantum cryptographyic algorithm and wherein the second cryptographic algorithm comprises a post-quantum cryptographic algorithm.

3. The method according to claim 2, wherein the client device comprises an uncompromised pre-quantum digital signature key pair (SKC1, PKC1), a trusted post-quantum digital certificate (KEM.cert (PKM2)) of a KEM public key (PKM2) of a Certificate Authority (CA) and a digital certificate (Sign.cert (PKC1)) of the pre-quantum signature public key (PKC1) of the client device.

4. The method according to claim 3, wherein the certificate authority (CA) comprises a post-quantum key encapsulation mechanism (KEM) key pair (SKM2, PKM2) and a post-quantum signature key pair (SKS1, PKS1).

5. The method according to claim 4, wherein for issuance of a digital certificate the client device performs in a first protocol (A) the following steps:
generating in a first step (S1-A) by the client device a new key pair (SKM1, PKM1) using a KEM key generation algorithm;
signing in a second step (S2-A) by the client device signs the public key (PKM1) using the signature private key (SKC1) of the digital signature key pair (SKC1, PKC1) held by the client device to provide a digital signature (S1);
generating in a third step (S3-A) by the client device a first secret (SS1) and a corresponding cipher-text (CT1) using a key encapsulation mechanism (KEM) key encapsulation algorithm with the public key (PKM2) held by the Certificate Authority (CA).
using in a fourth step (S4-A) by the client device a Key Derivation Function (KDF) to derive a symmetric key (K1) from the generated first secret (SS1);
encrypting in a fifth step (S5-A) by the client device the public key (PKM1) of the key pair (SKM1, PKM1) generated in the first step (S1-A,) the digital signature (S1) provided in the second step (S2-A), and the signature public key certificate (Sign.cert (PKC1)) held by the client device using an Authenticated Encryption with Associated Data (AEAD) algorithm and the symmetric key (K1) derived in the fourth step (S4-A) to obtain an encrypted cipher-text (ENC1); and
transmitting in a sixth step (S6-A) by the client device the cipher text (CT1) generated in the third step (S3-A) and the encrypted cipher text (ENC1) to the Certificate Authority (CA).

6. The method according to claim 5, wherein for issuance of a digital certificate the Certificate Authority (CA) performs in the first protocol (A) the following steps:
decapsulating in a seventh step (S7- A) by the Certificate Authority (CA) the received cipher-text (CT1) using its KEM private key (SKM2) and a KEM key de-capsulation algorithm to obtain the first secret (SS1);
using in an eighth step (S8-A) by the Certificate Authority (CA) a Key Derivation Function (KDF) to derive the symmetric key (K1) from the first secret (SS1) obtained in seventh step (S7-A);
decrypting in a ninth step (S9-A) by the Certificate Authority (CA) the received encrypted cipher-text (ENC1) using the symmetric key (K1) derived in the eighth step (S8-A) and an Authenticated Encryption with Associated Data (AEAD) decrypting algorithm to obtain the key encapsulation mechanism (KEM) public key (PKM1), the digital signature (S1), and the signature public key certificate (Sign.cert (PKC1)) of the client device;
validating in a tenth step (S10-A) by the Certificate Authority (CA) the certification path of the signature public key certificate (Sign.cert (PKC1) ) and the digital signature (S1) using the public key (PKC1) of the client device;
generating in an eleventh step (S11-A) by the Certificate Authority (CA) a certificate (KEM.cert (PKM1)) for the client's key encapsulation mechanism (KEM) public key (PKM1) and binding the public key (PKC1) of the client device to the generated certificate and signing the certificate with its private key (SKS1);
performing in a twelfth step (S12-A) by the Certificate Authority (CA) an encapsulation (KEM.Encap (PKM1)) of the client's key encapsulation mechanism (KEM) public key (PKM1) to obtain a second secret (SS2) and a corresponding cipher-text (CT2);
deriving in a thirteenth step (S13-A) by the Certificate Authority (CA) derives a secret key (K2) from the secrets (SS1, SS2) using a Key Derivation Function (KDF);
encrypting in a fourteenth step (S14-A) by the Certificate Authority (CA) the certificate (KEM.cert (PKM1)) generated in the eleventh step (S11-A) using the secret key (K2) derived in thirteenth step (S13-A) and an Authenticated Encryption with Associated Data (AEAD) encryption algorithm to provide an encrypted certificate (ENC2); and
transmitting in a fifteenth step (S15-A) by the Certificate Authority (CA) the cipher-text (CT2) obtained in the twelfth step (S12-A) and the encrypted certificate (ENC2) to the client device.

7. The method according to claim 6, wherein for issuance of a digital certificate the client device performs in the first protocol (A) the following steps:
decapsulating in a sixteenth step (S16-A) by the client device the received cipher-text (CT2) using its private key (SKM1) generated in the first step (S1-A) and a KEM key decapsulation algorithm to obtain the second secret (SS2);
deriving in a seventeenth step (S17-A) by the client device a secret key (K2) from the first and second secret (SS1, SS2) using a Key Derivation Function (KDF);
decrypting in an eighteenth step (S18-A) by the client device the received encrypted certificate (ENC2) using the secret key (K2) derived in the seventeenth step (S17-A) and an Authenticated Encryption with Associated Data (AEAD) decryption algorithm to obtain the digital certificate of the client's key encapsulation mechanism (KEM) public key (PKM1) (KEM.cert (PKM1)); and accepting in a nineteenth step (S19-A) by the client device the obtained digital certificate of the client's key encapsulation mechanism (KEM) public key (PKM1) (KEM.cert (PKM1)), if a check of the obtained digital certificate has been performed successfully by the client device.

8. The method according to any of the preceding claims, wherein for renewal of a digital certificate the client device performs in a second protocol (B) the following steps:
generating in a first step (S1-B) by the client device a new key pair (SKM3, PKM3) using a KEM key generation algorithm;
signing in a second step (S2-B) by the client device the public key (PKM3) using the signature private key (SKC1) of the digital signature key pair (SKC1, PKC1) held by the client device to provide a digital signature (S1);
generating in a third step (S3-B) by the client device a first secret (SS1) and a corresponding cipher-text (CT1) using a key encapsulation mechanism (KEM) key encapsulation algorithm with the public key (PKM2) held by the Certificate Authority (CA);
using in a fourth step (S4-B) by the client device a Key Derivation Function (KDF) to derive a symmetric key (K1) from the generated first secret (SS1);
encrypting in a fifth step (S5-B) by the client device the public key (PKM3) of the key pair (SKM3, PKM3) generated in the first step (S1-B,) the digital signature (S1) provided in the second step (S2-B), and the signature public key certificate (Sign.cert (PKC1)) held by the client device using an Authenticated Encryption with Associated Data (AEAD) algorithm and the symmetric key (K1) derived in the fourth step (S4-B) to obtain an encrypted cipher-text (ENC1); and
transmitting in a sixth step (S6-B) by the client device the cipher text (CT1) generated in the third step (S3-B) and the encrypted cipher text (ENC1) and the key encapsulation mechanism (KEM) public key certificate of the client device (KEM.Cert (PKM1)) that includes a binding value for the signature public key certificate, to the Certificate Authority (CA).

9. The method according to any of the preceding claims, wherein for renewal of a digital certificate the certificate authority (CA) performs in the second protocol (B) the following steps:
decapsulating in a seventh step (S7-B) by the Certificate Authority (CA) the received cipher-text (CT1) using its KEM private key (SKM2) and a KEM key de-capsulation algorithm to obtain the first secret (SS1);
using in an eighth step (S8-B) by the Certificate Authority (CA) a Key Derivation Function (KDF) to derive the symmetric key (K1) from the first secret (SS1) obtained in seventh step (S7-B);
decrypting in a ninth step (S9-B) by the Certificate Authority (CA) the received encrypted cipher-text (ENC1) using the symmetric key (K1) derived in the eighth step (S8-B) and an Authenticated Encryption with Associated Data (AEAD) decrypting algorithm to obtain the key encapsulation mechanism (KEM) public key (PKM3), the digital signature (S1), and the signature public key certificate (Sign.cert (PKC1)) of the client device;
verifying in a tenth step (S10-B) by the Certificate Authority (CA) the received key encapsulation mechanism (KEM) public key certificate of the client device (KEM.cert (PKM1)), checking the binding value included in the received certificate and verifying the digital signature (S1) using the public key (PKC1) of the client device;
generating in an eleventh step (S11-B) by the Certificate Authority (CA) a key encapsulation mechanism (KEM) certificate (KEM.cert (PKM3)) for the client's KEM public key (PKM3) and binding the signature public key (PKC1) of the client device to the generated key encapsulation mechanism (KEM) certificate and signing the generated key encapsulation mechanism (KEM) certificate with its private key (SKS1);
performing in a twelfth step (S12-B) by the Certificate Authority (CA) an encapsulation (KEM.Encap (PKM1)) of the client's key encapsulation mechanism (KEM) public key (PKM1) to obtain a second secret (SS2) and a corresponding cipher-text (CT2);
performing in a thirteenth step (S13-B) by the Certificate Authority (CA) an encapsulation (KEM.Encap (PKM3)) of the client's key encapsulation mechanism (KEM) public key (PKM3) to obtain a third secret (SS3) and a corresponding cipher-text (CT3);
deriving in a thirteenth step (S14-B) by the Certificate Authority (CA) a secret key (K2) from the secrets (SS1, SS2, SS3) using a Key Derivation Function (KDF);
encrypting in a fifteenth step (S15-B) by the Certificate Authority (CA) the certificate (KEM.cert (PKM3)) generated in the eleventh step (S11-B) using the secret key (K2) derived in fourteenth step (S14-B) and an Authenticated Encryption with Associated Data (AEAD) encryption algorithm to provide an encrypted certificate (ENC2); and
transmitting in a sixteenth step (S16-B) by the Certificate Authority (CA) the cipher-text (CT2) obtained in the twelfth step (S12-B),the cipher text (CT3) obtained in the thirteenth step (S13-B) and the encrypted certificate (ENC2) to the client device.

10. The method according to claim 9, wherein for renewal of a digital certificate the client device performs in the second protocol (B) the following steps:
decapsulating in a seventeenth step (S17-B) by the client device the received cipher-text (CT2) using its private key (SKM1) and a KEM key decapsulation algorithm to obtain the second secret (SS2);
decapsulating in an eighteenth step (S18-B) by the client device the received cipher-text (CT3) using its private key (SKM3) and a KEM key decapsulation algorithm to obtain the third secret (SS3);
deriving in a nineteenth step (S19-B) by the client device a secret key (K2) from the first secret, the second secret and from the third secret (SS1, SS2, SS3) using a Key Derivation Function (KDF);
decrypting in an twentieth step (S20-B) by the client device the received encrypted certificate (ENC2) using the secret key (K2) derived in the nineteenth step (S19-B) and an Authenticated Encryption with Associated Data (AEAD) decryption algorithm to obtain the digital certificate of the client's key encapsulation mechanism (KEM) public key (PKM3) (KEM.cert (PKM3)); and
accepting in a twenty-first step (S21-B) by the client device the obtained digital certificate of the client's key encapsulation mechanism (KEM) public key (PKM3) (KEM.cert (PKM3)), if a check of the obtained digital certificate has been performed successfully by the client device.

11. The method according to any of the preceding claims, wherein the client's signature public key (PKC1) is bound by the certificate Authority (CA) to the KEM certificate by attaching the client's signature public key (PKC1), a hash of the client's signature public key (PKC1) or by attaching a signature of a certificate of the client's signature public key ((Sign.cert (PKC1)) as an attribute to the KEM certificate.

12. The method according to any of the preceding claims, wherein an exchange of a certificate signing request including a signature transmitted in a message from the client device to the Certificate Authority (CA), and the issued certificate transmitted from the Certificate Authority (CA) to the client device, is performed in an authenticated encrypted way, based on symmetric keys derived from a KEM.

13. A system for providing key encapsulation mechanism (KEM)-based issuing and renewal of digital certificates during migration of credentials of a client device from a first cryptographic algorithm to a second cryptograhic algorithm comprising a public key infrastructure (PKI) connecting the client device to a Certificate Authority (CA) and adapted to perform a method according to any of the claims 1 to 12, wherein KEM operations can be replaced with postquantum signature operations.
